# EUROPÄISCHE PATENTANMELDUNG

(11) **EP 1 903 332 A1**
(43) Veröffentlichungstag der Anmeldung: **26.03.2008**
(21) Anmeldenummer: 07017447.9
(22) Anmeldetag: 06.09.2007
(51) Int. Cl.: G01N 21/94, B60S 1/08

(54) **Sensor zur Detektion von Schmutz und/oder Regen und Verfahren zum Betreiben eines Sensors**

(30) Priorität: 13.09.2006 DE 102006044792
(71) Anmelder: Schefenacker Vision Systems Germany GmbH, 71409 Schwaikheim (DE); Schefenacker Patents S.à.r.l., 2346 Luxembourg (LU)
(72) Erfinder: Mack, Bernd, 73630 Remshalden (DE)
(74) Vertreter: Kaufmann, Ursula Josefine

(57) **Zusammenfassung**

Die Erfindung betrifft einen Sensor zur Detektion von Schmutz und/oder Regen mit wenigstens einer Sendeeinheit (12, 112) und wenigstens einer Empfängereinheit (16, 116) sowie einer Prüffläche (22, 122), wobei eine Anlagerung (30, 32) auf der Prüffläche (22, 122) durch einen von der Sendeeinheit (12, 112) ausgesandten und dem Empfängereinheit (16, 116) aufgefangenen Lichtstrahl (24, 26; 124, 126) detektierbar ist. Die Sendeeinheit (12, 112) weist wenigstens zwei Sender (114) auf, von denen wenigstens einer aus zwei oder mehr lokal eng benachbarten Sendequellen (114a, 114b, 114c, 114d) besteht, wobei jedem Sender (114) ein Empfänger (18, 118) der Empfängereinheit (16, 116) zugeordnet ist. Der oder die Empfänger (18, 118) weisen einen oder mehrere Einzelempfänger auf, wobei wenigstens einer der Sender (114) dazu ausgebildet ist, wenigstens zwei unterschiedliche Wellenlängen auszusenden, die von dem zugeordneten Empfänger (18, 118) detektierbar sind.

## Beschreibung

Die Erfindung betrifft einen Sensor zur Detektion von Schmutz und/oder Regen und ein Verfahren zum Betreiben eines Sensors nach den Oberbegriffen der unabhängigen Ansprüche.

Es ist bekannt, optoelektronische Sensoreinrichtungen als Schmutzdetektoren oder Regendetektoren einzusetzen. Üblicherweise besteht eine solche Sensoreinrichtung aus mindestens einer Sendeeinheit, welche Prüflicht aussendet und mindestens einer Empfängereinheit. Auf einer Prüffläche abgelagerte Verschmutzungen beeinflussen die Intensität des von der Empfängereinheit aufgefangenen Prüflichts. Die Sendeeinheit umfasst meist eine halbleiterbasierte Strahlungsquelle, die vorzugsweise im nahen Infrarot arbeitet. Als Empfänger kommen meist PIN-Dioden zum Einsatz, die über einen großen Wellenlängenbereich empfindlich sind.

Regensensoren arbeiten üblicherweise auf Reflexionsbasis, wobei ein Lichtstrahl in einem flachen Winkel in die Prüffläche, beispielsweise eine Frontscheibe eines Fahrzeugs, gestrahlt und von der äußeren Grenzschicht zum Empfänger zurückreflektiert wird. Liegt eine Verschmutzung durch ein undurchsichtiges Medium wie etwa Staub an der Prüffläche auf, verändern sich die Reflexionseigenschaften der Grenzschicht Glas zu Luft und Staub, außerdem wird Licht im Staub absorbiert. Die im Empfänger gemessene Lichtstärke nimmt ab. Trifft der Lichtstrahl zufällig auf einen Regentropfen auf der Prüffläche, kann es vorkommen, dass dieser Lichtstrahl vollständig aufgestreut wird und keine Intensität mehr im Empfänger registriert wird, was fälschlicherweise als hundertprozentige Verschmutzung interpretiert wird.

Schmutzsensoren auf Durchlichtbasis, wie sie beispielsweise aus der DE 10 2004 038 422 B3 bekannt sind, arbeiten nach dem Prinzip einer Lichtschranke. Licht tritt einmal oder mehrmals durch eine Prüffläche und trifft dann auf einen Empfänger. Der Verschmutzungsgrad kann aus der bekannten ausgesandten Intensität und aus der tatsächlich empfangenen Intensität abgeleitet werden. Bei lichtundurchlässiger Verschmutzung, wie etwa Staub, ist die Abnahme der Intensität am Empfänger proportional zum Grad der Verschmutzung. Bei transparenten Schmutzarten wie Wasser oder Öl können die Tropfen, wie beim Regensensor beschrieben, als optische Elemente wirken und den Messlichtstrahl umlenken. Unter geometrisch ungünstigen Bedingungen, wenn beispielsweise ein Wassertropfen direkt im Weg des Lichtstrahls sitzt, empfängt der Empfänger keine Intensität und erkennt fälschlich auf vollständige Verschmutzung.

Bei üblichen Regensensoren, z.B. in einem Fahrzeug, werden solche Fehlmessungen in Kauf genommen; eine Ansteuerung des Scheibenwischers erfolgt unabhängig davon, ob sich Staub oder Wasser auf der Frontscheibe befindet.

Werden solche Sensoren allerdings eingesetzt, um bei erkannter Verschmutzung etwa eine Leuchtstärke einer Fahrzeugleuchte nachzuregeln oder eine Überprüfung der Funktion des Sensors durchzuführen, ist eine solche Fehlinterpretation von transparenten und nur kurzzeitig anhaftenden Wassertropfen als staubähnliche Verschmutzung störend.

Aufgabe der Erfindung ist es, einen Sensor zur Detektion von Schmutz und/oder Regen anzugeben, bei dem eine Unterscheidung zwischen transparenten Anlagerungen, wie z.B. Wasser, und lichtundurchlässigen Anlagerungen, wie z.B. Staub, möglich ist. Weiterhin ist ein Verfahren zum Betreiben des Sensors anzugeben.

Die Aufgabe wird durch die Merkmale der unabhängigen Ansprüche gelöst. Vorteilhafte Ausgestaltungen sind Gegenstand der weiteren Ansprüche.

Ein erfindungsgemäßer Sensor zur Detektion von Schmutz und/oder Regen weist wenigstens eine Sendeeinheit und wenigstens eine Empfängereinheit sowie eine Prüffläche auf, wobei eine Anlagerung auf der Prüffläche durch von der Sendeeinheit ausgesandtes und der Empfängereinheit aufgefangenes Licht detektierbar ist. Die Sendeeinheit weist wenigstens zwei Sender auf, von denen wenigstens einer aus zwei oder mehr lokal eng benachbarten Sendequellen besteht. Jedem Sender ist ein Empfänger der Empfängereinheit zugeordnet. Der oder die Empfänger weisen einen oder mehrere Einzelempfänger auf. Wenigstens einer der Sender ist dazu ausgebildet, wenigstens zwei unterschiedliche Wellenlängen auszusenden, die von dem zugeordneten Empfänger detektierbar sind. Günstigerweise ist dann bei einer transparenten Anlagerung, insbesondere von Wassertropfen, auf der Prüffläche eine größere Variation der empfangenen Lichtintensität der unterschiedlichen Wellenlängen in der Empfängereinheit detektierbar als bei einer im Sichtbaren undurchlässigen Anlagerung.

Durch Betrachtung der Variation der vom Empfänger empfangenen Lichtintensität als Funktion der Wellenlänge kann eine Unterscheidung zwischen im Sichtbaren undurchlässigen Anlagerungen, etwa Staub und im Sichtbaren durchlässigen Anlagerungen, etwa Wasser, getroffen werden. So absorbiert Wasser Strahlung vor allem im ultravioletten Bereich und längerwelligen Infrarotbereich, so dass bei einer Variation der Wellenlänge des vom Sender ausgesandten Prüflichts der Empfänger relativ starke Intensitätsvariationen nachweisen wird, während es für sichtbares Licht wesentlich durchlässiger ist. Eine Anlagerung wie Staub absorbiert dagegen relativ unabhängig von der Wellenlänge, so dass die vom Empfänger nachgewiesene Intensität nur eine geringe Variation in Abhängigkeit der Wellenlänge zeigt. Es kann ein Sender vorgesehen sein, der breitbandig abstrahlt, insbesondere in dem Wellenlängenbereich im Ultravioletten bis in den längerwelligen Infrarotbereich, oder mehrere Sender, insbesondere auf Halbleiterbasis wie lichtemittierende Dioden (LEDs), die jeweils nahezu monochromatisches Licht, aber mit unterschiedlicher Wellenlänge, abstrahlen. Vorzugsweise kommen Wellenlängen im Bereich des Ultravioletten, besonders bevorzugt im Bereich ≤ 0,3 µm, und im längerwelligen Infrarotbereich, besonders bevorzugt im Bereich ≥ 1 µm, zum Einsatz. Licht soll hier als elektromagnetische Strahlung mit einer Wellenlänge im Bereich von Infrarot bis Ultraviolett verstanden werden, also sowohl im sichtbaren Spektrum (VIS) als auch außerhalb des sichtbaren Spektrums. Der Sensor ist vorteilhaft dazu geeignet, im Zusammenhang mit einer Leuchtstärkenregelung eingesetzt zu werden, bei der eine Verschmutzung von Fahrzeugleuchten durch eine Verstärkung der abgestrahlten Lichtintensität kompensiert werden soll. Eine unnötige und ungewollte Erhöhung der Lichtintensität durch eine Fehlbestimmung von Anlagerungen, bei denen transparente Anlagerungen in Form von Wassertropfen mit undurchsichtigen Anlagerungen wie Staub verwechselt werden, kann vermieden werden.

Günstigerweise kann die Sendeeinheit wenigstens zwei Sender mit unterschiedlicher Wellenlänge umfassen. Jedem Sender ist jeweils ein Empfänger zugeordnet. Es können übliche LEDs eingesetzt werden. Vorteilhaft ist, wenn wenigstens einer der Sender mehrere Sendequellen umfasst, die eng benachbart und vom nächsten Sender räumlich getrennt sind. Die Verwendung unterschiedlicher Wellenlängen bei geeigneter Positionierung der Sendequellen kann den geometrischen Wegunterschied der Lichtstrahlen, welcher durch die unterschiedlichen Wellenlängen verursacht wird, von der jeweiligen Sendequelle zu dem gemeinsamen Empfänger ausgleichen. Es können mehrere Einzelempfänger vorgesehen sein, welche einen Empfänger bilden. Dadurch kann auch eine Lichtintensität erfasst werden, die nicht exakt auf einen einzelnen Einzelempfänger gerichtet ist, sondern etwas versetzt dazu. Damit ist der Sensor insgesamt robust gegen Herstellungstoleranzen bei der Ausrichtung der Sender und Empfänger.

Sitzt ein Wassertropfen ungünstig auf der Prüffläche, beispielsweise direkt im Strahlengang zwischen den Sendequellen / dem Sender und dem zugeordneten gemeinsamen Empfänger der Sendequellen / des Senders, kann es geschehen, dass der Empfänger keine Intensität des Prüflichts empfängt. Durch die unterschiedlichen Wellenlängen kann eine charakteristische Variation des Signals am Empfänger beobachtet werden. Wasser absorbiert im Ultravioletten und im Infraroten und ist im Sichtbaren transparent, so dass eine Variation der empfangenen Intensität zu erwarten ist. Geringe geometrische Wegunterschiede bei unterschiedlichen Wellenlängen kann eine große Variation der empfangenen Intensität hervorrufen. Ist dagegen Staub als Ablagerung auf der Prüffläche im Strahlengang vorhanden, ist eine Variation der Lichtintensität als Funktion der Wellenlänge deutlich geringer oder gar nicht vorhanden.

Ein weiterer erfindungsgemäßer Sensor zur Detektion von Schmutz und/oder Regen weist wenigstens eine Sendeeinheit und wenigstens eine Empfängereinheit sowie eine Prüffläche auf, wobei eine Anlagerung auf der Prüffläche durch von der Sendeeinheit ausgesandtes und der Empfängereinheit aufgefangenes Licht detektierbar ist. Die Sendeeinheit weist wenigstens zwei Sender auf, wobei wenigstens einer aus wenigstens zwei oder mehr lokal eng benachbarten Sendequellen besteht. Jedem der Sender ist je ein Empfänger der Empfängereinheit zugeordnet. Jeder Empfänger weist einen oder mehrere Einzelempfänger auf. Vorteilhaft verursacht vom Sender ausgesendetes Prüflicht bei Anlagerung eines transparenten Wassertropfens auf der Prüffläche eine größere Variation der empfangenen Lichtintensität in dem Empfänger der Empfängereinheit, der dem jeweiligen Sender zugeordnet ist, als bei Anlagerung einer lichtdämpfenden Verschmutzung.

Der dem Sender zugeordnete Empfänger kann vorteilhaft aus einer Gruppe von einzelnen, eng benachbarten Einzelempfängern bestehen. Weist der Sender mehrere Sendequellen auf, ist der Empfänger der gemeinsame Empfänger für die Sendequellen des Senders. Die Sendequellen können entweder mit gleicher Wellenlänge oder auch mit unterschiedlichen Wellenlängen arbeiten. Durch den räumlichen Versatz der Sendequellen und/oder der Einzelempfänger gegeneinander kann ein geometrisch ungünstig auf der Prüffläche sitzender Wassertropfen erkannt werden, da dieser meist lokal begrenzt ist und somit eine geringe Veränderung des Strahlengangs, d.h. der Weglänge der Lichtstrahlung zwischen Sender und Empfänger, bereits ausreichen kann, um eine deutliche Variation in der Intensität des empfangenen Signals im Empfänger zu verursachen. Der Sensor ist vorteilhaft dazu geeignet, im Zusammenhang mit einer Leuchtstärkenregelungseinrichtung eingesetzt zu werden, bei der eine Verschmutzung von Leuchten durch eine Verstärkung der abgestrahlten Lichtintensität kompensiert werden soll. Eine ungewollte Erhöhung der Lichtintensität durch eine Verwechslung von Anlagerungen von transparenten Wassertropfen mit lichtundurchlässigen bzw. lichtdämpfenden Anlagerungen von Schmutz kann vermieden werden.

Weisen dann zudem die von den Sendern ausgesandten Lichtstrahlen unterschiedliche Wellenlängen auf, kann diese Variation in der Intensität des empfangenen Signals im Empfänger in Kombination mit den räumlichen Versatz der Sendequellen in einem oder mehreren Sendern noch verstärkt werden. Dabei ist der räumliche Versatz so, dass der Empfänger Signale des zugehörigen Senders bzw. der dem Sender zugehörigen Sendequellen sicher empfangen kann, auch wenn diese durch den Versatz der Sendequellen geringfügig unterschiedliche optische Wege vom Sender zum Empfänger aufweisen. Dies kann dadurch günstig bewerkstelligt werden, dass die Sendequellen des Senders auf einem eng begrenzten Gebiet angeordnet sind, dessen Fläche etwa der Fläche der Anzahl der Sendequellen entspricht, vorzugsweise höchstens fünfmal so groß ist, besonders bevorzugt höchstens dreimal so groß ist. Die Fläche ist vorzugsweise so begrenzt, dass der gemeinsame Empfänger der Sendequellen des Senders deren Einzelsignale empfangen kann. Benachbarte Sender und/oder Empfänger sind zuverlässig voneinander getrennt.

Bevorzugt ist eine Ausgestaltung des Sensors als Durchlichtsensor. Ein solcher Sensor eignet sich besonders als Schmutzsensor.

Bevorzugt ist ebenso eine Ausgestaltung des Sensors als Reflexionssensor. Ein solcher Sensor eignet sich besonders als Regensensor.

Zweckmäßigerweise kann eine Auswerteeinheit vorgesehen sein, um eine wellenlängenabhängige Intensitätsvariation der empfangenen Lichtstrahlen und/oder eine ortsabhängige Intensitätsvariation der empfangenen Lichtstrahlen zu analysieren, wie etwa eine Recheneinheit mit Prozessoreinheit und Speichereinheit, mit denen Signale des oder der Empfänger der Empfangseinheit abhängig von der abgestrahlten Wellenlänge und/oder der geometrischen Position der Sendequellen des oder der Sender ausgewertet werden können. Insbesondere können Intensitäten, die bei einer ersten Wellenlänge bestimmt wurden, mit Intensitäten verglichen werden, die bei einer anderen oder mehreren anderen Wellenlängen bestimmt wurden. Zusätzlich oder alternativ können Signale des Empfängers, insbesondere von Einzelempfängern jedes einzelnen Empfängers, der Einzelempfänger aufweist, bewertet werden. Die Auswerteeinheit kann zweckmäßigerweise mit einer Steuer- oder Regeleinheit für eine adaptive Leuchtstärkennachführung in einem Fahrzeug kombiniert sein. Sind sowohl wellenlängenabhängige als auch ortsabhängige Signale zu analysieren, kann dies mit einer gemeinsamen Auswerteeinheit erfolgen.

Bevorzugt kann die Sendeeinheit lichtemittierende Dioden als Sender und/oder als Sendequellen umfassen. Die lichtemittierenden Dioden strahlen vorzugsweise nahezu monochromatisches Licht ab, so dass z.B. eine Untersuchung abhängig von verschiedenen Wellenlängen einfach zu bewerkstelligen ist.

Alternativ kann die Sendeeinheit wenigstens einen breitbandigen Sender umfassen. In diesem Fall ist es besonders zweckmäßig, wenn die Empfängereinheit ein Bandpassfilter umfasst. Die Sendeeinheit kann auch einen oder mehrere in einem breiten Wellenlängenbereich abstrahlende Sender aufweisen und die Empfängereinheit einen oder mehrere Empfänger mit einem oder mehreren Einzelempfängern, wobei jedem Empfänger ein Sender zugeordnet ist. Das Signal kann dann räumlich und/oder spektral ausgewertet werden.

Entsprechend einer günstigen Weiterbildung des Sensors kann die Empfängereinheit aus einem oder mehreren Empfängern bestehen. Vorzugsweise sind in der Empfangseinheit so viele Empfänger wie Sender in der Sendeeinheit vorgesehen.

Der eine oder die mehreren Empfänger können mit der Sendeeinheit bzw. mit einem oder mehreren Sendern der Sendeeinheit zeitlich synchronisierbar sein. Dadurch ist eine spektrale, wellenlängenbezogene Auswertung des empfangenen Signals möglich.

Es können dem einen oder den mehreren Empfänger Mittel zugeordnet sein, mit denen das Licht wellenlängenunabhängig erfassbar ist. Die Mittel können vorgeschaltete Elemente sein, insbesondere Filter und/oder Prismen. Ebenso kann der Empfänger empfängerspezifische Eigenschaften aufweisen, die eine wenigstens überwiegend wellenlängenunabhängige Detektion des Lichts im gewünschten Wellenlängenbereich ermöglichen.

Ebenso kann das Licht durch den einen oder die mehreren Empfänger spektral auswertbar sein. Hier können Empfänger eingesetzt werden, deren empfängerspezifische Eigenschaften eine spektrale Auswertung ermöglichen. Günstig sind Empfänger, wie sie in digitalen Farbkameras eingesetzt werden, die beispielsweise durch vorgeschaltete, so genannte "Beyer-Pattern" in der Lage sind bzw. es ermöglichen, über einen großen Wellenlängenbereich jeder empfangenen Wellenlänge eine Intensität zuzuordnen.

Bei dem erfindungsgemäßen Verfahren zum Betreiben eines Sensors zur Detektion von Schmutz und/oder Regen mit wenigstens einer Sendeeinheit und wenigstens einer Empfängereinheit sowie einer Prüffläche wird eine Anlagerung auf der Prüffläche durch von der Sendeeinheit ausgesandtes und der Empfängereinheit aufgefangenes Licht detektiert. Ein von einem Empfänger der Empfängereinheit empfangenes Signal wird abhängig von seiner Wellenlänge des zugeordneten Senders und/oder seinem geometrischen Herkunftsort der zugeordneten Sendequellen des Senders analysiert, wobei wenigstens zwei Sendequellen eines Senders angesteuert werden. Dies kann zeitlich versetzt oder gleichzeitig erfolgen, wobei der Unterschied in deren geometrischer Position zu einer möglichen Anlagerung ausgenutzt wird. Senden die Sendequellen unterschiedliche Wellenlängen aus, kann auch der zusätzliche Weg des Lichts ausgenutzt werden. Sind mehrere Empfänger vorhanden, analysiert jeder Empfänger das Signal eines Senders. Jeder Sender kann eine oder mehrere Sendequellen aufweisen, ebenso kann der Empfänger einen oder mehrere Einzelempfänger aufweisen, deren Signale geeignet kombiniert werden können.

Dabei kann ein Sender der Sendeeinheit ein breitbandiges Signal mit mehreren Wellenlängen abgeben oder wenigstens zwei Sendequellen eines Senders der Sendeeinheit, welche einem gemeinsamen Empfänger der Empfängereinheit zugeordnet sind, zeitlich versetzt zueinander betrieben werden. Besonders lokal begrenzte, insbesondere transparente Anlagerungen in Form von Wassertropfen, können dadurch von flächigen, lichtundurchlässigen bzw. lichtdämpfenden Anlagerungen wie Staub und dergleichen, unterschieden werden.

Eine Variation der Lichtintensität des empfangenen Signals z.B. innerhalb von einem oder mehreren Messzyklen kann als Funktion der Wellenlänge und/oder des geometrischen Orts des Senders untersucht werden. Dies erleichtert die Unterscheidung zwischen Anlagerungen von Wasser und von Schmutz.

Bei Überschreiten eines kritischen Werts der Variation der Lichtintensität kann auf das Vorhandensein von Wasser als Anlagerung erkannt werden. In diesem Fall sollte bei einem Einsatz des Sensors bei einer Vorrichtung mit Leuchtstärkenregelung die Leuchtstärke nicht nachgeregelt werden, da keine lichtdämpfende Verschmutzung vorliegt, sondern der Sensor lediglich nass ist.

Bei Unterschreiten eines kritischen Werts der Variation der Lichtintensität, z.B. innerhalb eines Messzyklus oder von Messzyklus zu Messzyklus, kann auf das Vorhandensein von Staub oder sonstigem Schmutz als Anlagerung erkannt werden. In diesem Fall wäre eine Nachregelung der Leuchtstärke erforderlich. Die Größe des kritischen Werts kann für ein gegebenes System jeweils individuell festgelegt werden. So könnte eine Variation im Bereich von höchstens 10 % der Intensität beispielsweise als unkritisch angesehen werden.

Weitere Vorteile und Einzelheiten der Erfindung werden im Folgenden anhand von in der Zeichnung beschriebenen bevorzugten Ausführungsbeispielen näher erläutert, ohne dass die Erfindung auf diese Ausführungsbeispiele beschränkt ist.

Es zeigen:
- Fig. 1 a-c: schematisch eine Erläuterung von Ausbreitungsbedingungen eines Lichtstrahls eines bevorzugten Sensors auf Reflexionsbasis mit sauberer Prüffläche (Fig. 1 a) und abhängig von einer Anlagerung (Fig. 1 b, 1c);
- Fig. 2a, b: schematisch eine Erläuterung der Ausbreitungsbedingungen eines Lichtstrahls eines bevorzugten Sensors auf Durchlichtbasis mit sauberer Prüffläche (Fig. 2a) und Wasser als Anlagerung (Fig. 2b);
- Fig. 3a, b: eine Draufsicht auf einen bevorzugten Sensor auf Durchlichtbasis mit einem Sender, der eine Mehrzahl von Sendequellen umfasst (Fig. 3a) und zusätzlich einem Empfänger, der aus Einzelempfängern gebildet ist (Fig. 3b).

In den Figuren sind funktionell gleich wirkende Elemente mit gleichen Bezugszeichen beziffert.

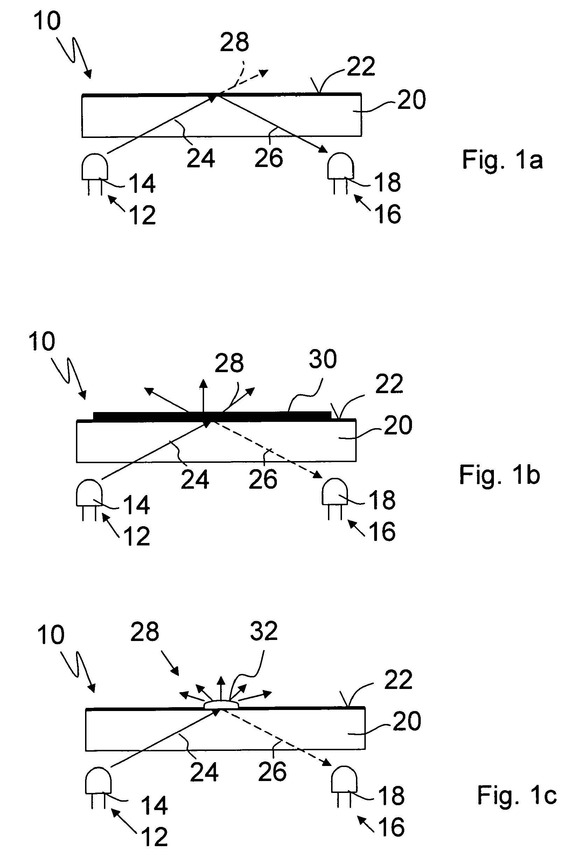

Die Figuren 1 a-1 c erläutern zum besseren Verständnis der Erfindung schematisch Ausbreitungsbedingungen von Prüflicht mit Lichtstrahlen 24, 26, 28 eines bevorzugten Sensors 10 auf Reflexionsbasis mit sauberer Prüffläche 22 (Figur 1 a) und abhängig von einer lichtdämpfenden, flächigen Anlagerung 30 von Staub (Figur 1 b) und einer lokalen, transparenten Anlagerung 32 von Wasser (Figur 1c). Ein solcher Sensor 10 mit dieser Geometrie wird häufig als Regensensor eingesetzt.

Eine Sendeeinheit 12 mit einem vorzugsweise als LED ausgebildeten Sender 14 strahlt einen Lichtstrahl 24 ab, der an einer Prüffläche 22 reflektiert und als reflektierter Strahl 26 zum Empfänger 18 einer Empfängereinheit 16 geleitet wird. Die Prüffläche 22 ist als äußere Oberfläche eines transparenten Prüfkörpers 20, beispielsweise einer Scheibe, ausgebildet. Je nach Einfallswinkel und/oder Wellenlänge des Lichts wird der ausgesandte Lichtstrahl 24 nicht totalreflektiert, sondern ein Teil 28 wird nach außen gestreut (Fig. 1 a). Die vom Empfänger 18 empfangene Intensität des Lichtstrahls 26 ist dementsprechend verringert.

Sind Anlagerungen 30 vorhanden, wie in Figur 1 b als Staubschicht dargestellt ist, ist der reflektierte Lichtstrahl 26 in seiner Intensität stärker geschwächt. Abhängig von ihrer Dicke absorbiert die als Staubschicht ausgebildete Anlagerung 30 mehr oder weniger Intensität des Lichtstrahls 24, wobei auch ein Teil von Lichtstrahlen 28 nach außen gestreut wird. Die Ablagerung 30 ist typischerweise über eine relativ große Fläche mehr oder weniger homogen verteilt. Veränderungen in der Dicke der Ablagerung 30 erfolgen relativ langsam, typischerweise wächst eine Staubschicht mit der Zeit kontinuierlich an. Auch Alterungserscheinungen, die zur Dämpfung der Lichtintensität führen können, sind typischerweise langsam veränderliche Vorgänge.

Wird die Wellenlänge des Senders 14 verändert, ändert sich zwar der Weg des Prüflichts vom Sender 14 zum Empfänger 18. Trotzdem ist kaum eine Variation der Lichtintensität des Lichtstrahls 26 zu erwarten. Wird Licht von einer zum Sender 14 eng benachbarten Position ausgesandt, ist ebenfalls kaum eine Veränderung der vom Empfänger 18 empfangenen Intensität als Funktion der Position des Senders 14 zu erwarten.

In Figur 1 c ist die Situation bei einer Anlagerung 32 in Form eines Wassertropfens dargestellt. An der Grenzschicht zwischen Wassertropfen und Prüffläche 22 ändert sich bekanntermaßen der Brechungsindex. Ein Teil des Lichts tritt aus der Prüffläche 22 als Lichtstrahlen 28 nach außen und wird vom Wassertropfen aufgestreut. Nunmehr trifft eine geringere Lichtintensität auf den Empfänger 18 als bei sauberer Prüffläche 22. Im Extremfall trifft kein Licht mehr auf den Empfänger 18, wenn der Wassertropfen ungünstig platziert ist und beispielsweise direkt vom Lichtstrahl 24 getroffen wird.

Zwar weist die Prüffläche 22 dann eine Anlagerung 32 in Form von Wassertropfen auf, diese sind jedoch keine Verschmutzung im engeren Sinn, wie etwa Schlamm oder Staub.

Wird die Wellenlänge des Senders 14 verändert, ist wegen der lokalen Begrenzung des Wassertropfens eine stärkere Variation der Lichtintensität des empfangenen Lichtstrahls 26 zu erwarten als bei einer Staubschicht. Wird Licht von einer zum Sender 14 eng benachbarten Position ausgesandt, ist ebenfalls eine stärkere Veränderung des vom Empfänger 18 empfangenen Intensität als Funktion der Position des Senders 14 zu erwarten, vor allem dann, wenn der Wassertropfen eng begrenzt ist. Der Lichtstrahl einer eng zu dem Sender 14 benachbarten Lichtquelle würde dann möglicherweise den Wassertropfen nicht mehr erfassen oder weniger von diesem gestört werden, und der Empfänger 18 ein größeres Signal empfangen.

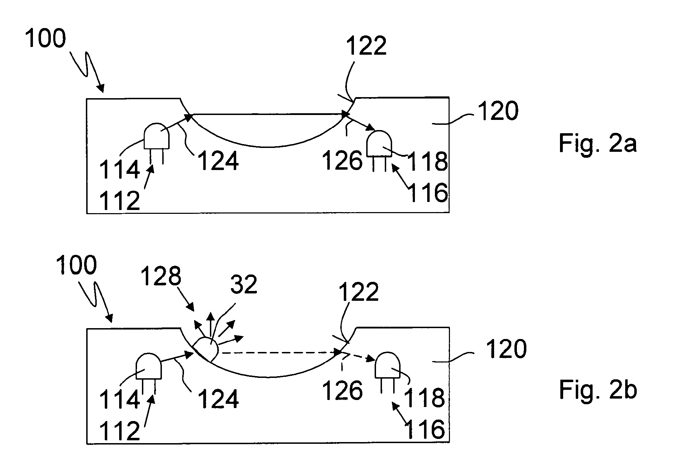

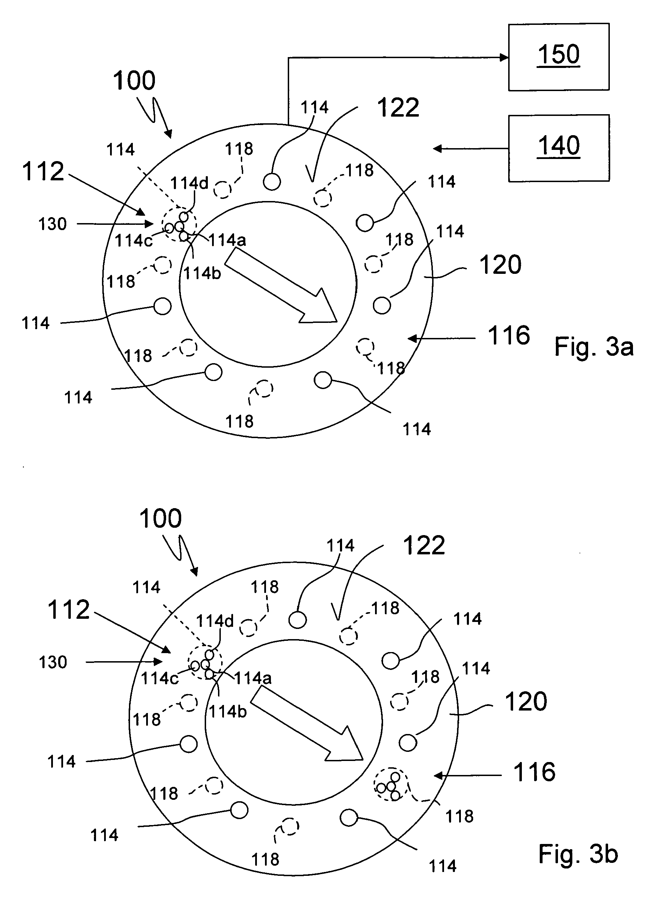

Die Figuren 2a und 2b sowie 3a und 3b erläutern die Verhältnisse bei einem bevorzugten Sensor 100 auf Durchlichtbasis mit sauberer Prüffläche 122 (Figur 2a) und mit Anlagerungen 32 in Form eines Wassertropfens (Figur 2b). Die dargestellten bevorzugten Ausgestaltungen von Sendeeinheit 112 und Empfängereinheit 116 sind jedoch auf einen Sensor auf Reflexionsbasis entsprechend übertragbar. Der Sensor 100 ist in den Figuren 3a, 3b in Draufsicht dargestellt.

Der im Schnitt dargestellte Sensor 100 umfasst einen Prüfkörper 120, in dem eine Sendeeinheit 112 und eine Empfängereinheit 116 angeordnet ist, sowie eine gewölbte Prüffläche 122, wobei die Prüffläche 122 die Lichtaustrittsfläche der Sendeeinheit 112 und die Lichteintrittsfläche der Empfängereinheit 116 umfasst. Die Sendeeinheit 112 weist wenigstens einen vorzugsweise als LED ausgebildeten Sender 114 auf und ist hier beispielhaft mit sieben Sendern 114 dargestellt. Die Empfängereinheit 116 umfasst wenigstens eine beispielsweise als Photodiode ausgebildeten Empfänger 118 und ist hier beispielhaft mit sieben Empfängern 118 dargestellt. Sender 114 und Empfänger 118 sind alternierend konzentrisch um die Prüffläche 122 angeordnet, wobei auf einen Sender 114 in Umfangsrichtung jeweils ein Empfänger 118 folgt. Jedem Sender 114 liegt somit ein Empfänger 118 diametral gegenüber. Der jeweilige Sender 114 ist dem diametral gegenüberliegenden Empfänger 118 zugeordnet, der dessen Signale empfängt und zu einer schematisch dargestellten Auswerteeinheit 150 weiterleitet. Eine Einheit 140 steuert die Sendeeinheit 112 und die Empfängereinheit 116 an.

Da die Prüffläche 122 gewölbt ist (in der Figur in die Zeichenebene hinein) tritt das Licht vom Sender 114 aus zweimal durch die Prüffläche 122 hindurch, bevor es den Empfänger 118 erreicht. Die Prüffläche 122 kann sogar eine Wellenstruktur aufweisen wie in der DE 10 2004 038 422 B3 und die ausgesendeten Lichtstrahlen entsprechend häufig durch die Prüffläche 122 hindurch treten.

Auch hier ist zu erkennen, dass die Intensität des empfangenen Lichts 126 abnimmt oder ungünstigerweise ganz verschwinden kann, wenn die lokal begrenzten Ablagerung 32 (Fig. 2b) ungünstig im Strahlengang zwischen Sender 114 und Empfänger 118 angeordnet ist.

Lagert sich Staub an, nimmt die empfangene Lichtintensität im Empfänger 118 proportional zur Staubdicke ab. Liegen dagegen Wassertropfen als Anlagerung 32 vor, sind lokale Variationen der empfangenen Lichtintensität zu erwarten, je nachdem, wo der Wassertropfen sich anlagert. Dies wird anhand des Sensors 100 auf Durchlichtbasis in den Figuren 3a, 3b in der Draufsicht auf den Sensor 100 näher erläutert. Dasselbe Prinzip ist auch auf den Sensor 10 auf Reflexionsbasis in Figur 1 übertragbar.

Die Sendeeinheit 112 umfasst eine Mehrzahl (hier sieben) von im Kreis konzentrisch um die Prüffläche 122 angeordneten Sendern 114. Zwischen den Sendern 114 sind Empfänger 118 der Empfängereinheit 116 ebenfalls konzentrisch um die Prüffläche 122 angeordnet. Jedem Sender 114 liegt ein diesem Sender 114 zugeordneter Empfänger 118 gegenüber.

Einer der Sender 114 ist in einem Gebiet 130 beispielhaft durch eine Gruppe von eng benachbarten weiteren Sendern gebildet, die im Weiteren als Sendequellen 114a, 114b, 114c, 114d bezeichnet werden. Diese Gruppe von Sendequellen 114a, 114b, 114c, 114d ist einem einzigen gemeinsamen Empfänger 118 der Empfängereinheit 116 zugeordnet, welcher der Gruppe bezogen auf die in den Prüfkörper 120 hinein gewölbte Prüffläche 122 gegenüberliegt, was mit einem dicken Pfeil angedeutet ist.

Die vorzugsweise als LEDs ausgebildeten Sendequellen 114a, 114b, 114c, 114d senden gemäß einer bevorzugten Weiterbildung der Erfindung jede mit einer unterschiedlichen Wellenlänge, welche der vorzugsweise breitbandige Empfänger 118 empfangen kann. Es können jedoch alternativ oder zusätzlich auch die aus einer einzelnen Sendequelle (Lichtquelle) gebildeten anderen Sender 114 mit unterschiedlichen Wellenlängen senden.

Es können alle Sender 114 der Sendeeinheit 112 durch wenigstens zwei oder mehrere Sendequellen 114a, 114b, 114c, 114d gebildet sein oder nur einige der Sender 114.

Üblicherweise werden die Sender 114 in einem Messzyklus in Umfangsrichtung um die Prüffläche 122 herum zeitlich aufeinander folgend von einer Ansteuereinheit 140 angesteuert, beispielsweise in Abständen von 100-200 ms, das Signal des jeweils diametral gegenüberliegenden Empfängers 118 gemessen und daraus die Verschmutzung der Prüffläche 122 bestimmt, so dass in einem Messzyklus die Prüffläche 122 einmal rundum abgetastet wird.

Ist eine als Wassertropfen ausgebildete Anlagerung 32 auf einem Gebiet 130 der Prüffläche 122 über der Gruppe von Sendequellen 114a, 114b, 114c, 114d angeordnet, zeigt sich eine relativ abrupt auftretende Intensitätsänderung in den verschiedenen Empfängern 118, sowohl in zeitlicher Hinsicht zwischen aufeinander folgenden Messzyklen, wenn nämlich der Wassertropfen erstmals auftritt, als auch innerhalb eines Messzyklus zwischen den Signalen der einzelnen Sender 114, wenn der Prüfstrahl zwischen den weiteren Sendern 114 und Empfängern 118 aufgrund der geometrischen Position des Wassertropfens diesen nicht mehr erfasst. Wäre dagegen Schmutz, etwa Staub, angelagert, würde diese Schmutzschicht zeitlich langsam variierend anwachsen und räumlich eher homogen verteilt sein und dementsprechend nur eine zeitlich langsame und räumlich geringe Variation der empfangenen Signale verursachen.

So ist das vom jeweiligen Empfänger 118 empfangene Signal der Sender 114 recht und links neben dem Gebiet 130 mit der Ablagerung 32 (Figur 2b) deutlich von dem Signal des Senders 114 im Gebiet 130 verschieden. Die benachbarten Sender 114 erfassen den Wassertropfen nicht. Geben die Sendequellen 114a, 114b, 114c, 114d voneinander unterschiedliche Wellenlänge ab, so zeigt sich eine Variation der empfangenen Intensität über der Wellenlänge, da Wasser im Infrarotbereich und im Ultravioletten absorbiert und im Sichtbaren transparent ist. Zweckmäßigerweise werden für das Prüflicht Wellenlängen verwendet, bei denen die optischen Eigenschaften des Wassers deutlich verschieden sind.

Weiterhin kann der räumliche Versatz der eng benachbarten Sendequellen 114a, 114b, 114c, 114d zueinander möglicherweise bereits ausreichend sein, eine Variation der Intensität des vom zugeordneten, diametral gegenüberliegenden Empfänger 118 empfangenen Signals hervorzurufen. Wäre Staub auf der Prüffläche 122 abgelagert, wäre die Variation zwischen den empfangenen Signalen der Sendequellen 114a, 114b, 114c, 114d geringer, und auch die Variation zwischen benachbarten Sendern 114 wäre allenfalls gering, da Staub die Prüffläche 122 erfahrungsgemäß flächig belegt.

Ein von einem Empfänger 118 der Empfängereinheit 116 empfangenes Signal kann daher abhängig von seiner Wellenlänge und/oder seinem geometrischen Herkunftsort des jeweils zugeordneten Senders 114 und/oder der Sendequellen 114a, 114b, 114c, 114d analysiert werden. Analog zu dieser Anordnung kann alternativ oder zusätzlich der Empfänger 118 auch aus einer Gruppe von eng benachbarten Empfängern bestehen, wie in Figur 3b dargestellt ist. In Figur 3b ist nur einer der Empfänger aus Einzelempfängern analog zu den Sendequellen 114a, 114b, 114c, 114d aufgebaut. Es können auch zwei oder mehr Empfänger 118 der Empfängereinheit 116 so ausgestaltet sein. Die Einzelempfänger sowie die Sendequellen 114a, 114b, 114c, 114d sind auf einer eng begrenzte Fläche verteilt, die gut von benachbarten Sendern 114 und Empfängern 118 getrennt ist. Zweckmäßigerweise ist die Fläche wenig größer, zweckmäßigerweise höchstens fünfmal so groß, bevorzugt höchstens dreimal so groß, besonders bevorzugt höchstens doppelt so groß wie die Gesamtfläche der Oberflächen der Einzelempfänger bzw. Sendequellen 114a, 114b, 114c, 114d des entsprechenden Empfängers 118 bzw. Senders 114.

Die Sendequellen 114a, 114b, 114c, 114d des Senders 114 der Sendeeinheit 112 können bevorzugt zeitlich versetzt zueinander betrieben und die Variation des empfangenen Signals als Funktion der Wellenlänge und/oder des geometrischen Orts der Sendequellen 114a, 114b, 114c, 114d untersucht werden. Ein solcher interner Messzyklus mit allen Sendequellen 114a, 114b, 114c, 114d eines Senders 114 kann vorzugsweise dann ausgelöst werden, wenn bei einem regulären Messzyklus ein irregulärer Messwert beobachtet wird, etwa ein Ausreißer bei den Messwerten Bei einem regulären Messzyklus sind alle üblichen Sender 114 und Empfänger 118 aktiv, z.B. mit "normalen" Sendern 114, die keine Sendequellen 114a, 114b, 114c, 114d aufweisen. Es kann dabei vorgesehen sein, dass bei der Ausgestaltung des Senders 114 mit mehreren Sendequellen 114a, 114b, 114c, 114d im Regelfall nur eine Sendequelle, z.B. die zentrale Sendequelle 114a, betrieben wird und die anderen Sendequellen 114b, 114c,114d nur bedarfsweise zugeschaltet werden, wenn ein irregulärer Messwert detektiert wird. Sind mehrere oder alle Sender 114 mit Sendequellen 114a, 114b, 114c, 114d ausgestattet, kann entsprechend vorgesehen sein, dass im Regelfall nur jeweils eine der Sendequellen 114a, 114b, 114c oder 114d des jeweiligen Senders 114 betrieben wird und die anderen Sendequellen 114a, 114b, 114c oder 114d des jeweiligen Senders 114 nur bedarfsweise zugeschaltet werden. Alternativ können jedoch auch alle Sendequellen 114a, 114b, 114c, 114d der Sender 114 bei jedem Messzyklus mit unterschiedlichen Wellenlängen und/oder räumlich versetzt angesteuert werden. Analog kann dies auch bei einer Ausgestaltung eines oder mehrerer Empfänger 118 als Gruppe von zwei oder mehr Einzelempfängern erfolgen, so dass im Regelfall nur ein Einzelempfänger des entsprechenden Empfängers 118 aktiv ist und die anderen Einzelempfänger bedarfsweise bei Auftreten eines irregulären, auffälligen Messwerts der Lichtintensität bzw. einer auffälligen Änderung der Lichtintensität zugeschaltet. Der Messwert kann dann einer entsprechenden Plausibilitätsbetrachtung unterzogen werden, die z.B. zwischen Staub und Wasser als Anlagerung 30, 32 unterscheiden lässt.

Bei Überschreiten eines kritischen Werts der Variation der Intensität des empfangenen Lichts im Empfänger 118 wird auf das Vorhandensein von Wasser als Anlagerung 32 erkannt. Bei Kopplung mit einer Leuchtstärkenregelung von Fahrzeugleuchten kann dann eine Anpassung der Leuchtstärke der Fahrzeugleuchten unterbleiben. Bei Unterschreiten eines kritischen Werts der Variation wird auf das Vorhandensein von Staub als Anlagerung 30 erkannt und gegebenenfalls eine Anpassung der Leuchtstärke vorgenommen.

## Patentansprüche

1. Sensor zur Detektion von Schmutz und/oder Regen mit wenigstens einer Sendeeinheit (12, 112) und wenigstens einer Empfängereinheit (16, 116) sowie einer Prüffläche (22, 122), wobei eine Anlagerung (30, 32) auf der Prüffläche (22, 122) durch einen von der Sendeeinheit (12, 112) ausgesandten und dem Empfängereinheit (16, 116) aufgefangenen Lichtstrahl (24, 26; 124, 126) detektierbar ist, **dadurch gekennzeichnet, dass**
- die Sendeeinheit (12, 112) wenigstens zwei Sender (14, 114) aufweist, von denen wenigstens einer aus zwei oder mehr lokal eng benachbarten Sendequellen (114a, 114b, 114c, 114d) besteht,
- jedem Sender (14, 114) ein Empfänger (18, 118) der Empfängereinheit (16, 116) zugeordnet ist,
- der oder die Empfänger (18, 118) einen oder mehrere Einzelempfänger aufweisen, und
- dass wenigstens einer der Sender (14, 114) dazu ausgebildet ist, wenigstens zwei unterschiedliche Wellenlängen auszusenden, die von dem zugeordneten Empfänger (18, 118) detektierbar sind.

2. Sensor nach Anspruch 1, **dadurch gekennzeichnet, dass** der wenigstens eine Sender (14, 114) wenigstens zwei Sendequellen (114a, 114b, 114c, 114d) mit unterschiedlicher Wellenlänge umfasst.

3. Sensor nach Anspruch 2, **dadurch gekennzeichnet, dass** die Sendequellen (114a, 114b, 114c, 114d) des wenigstens einen Senders (14, 114) so eng benachbart sind, dass deren Strahlung von dem jeweiligen, dem Sender (14, 114) zugeordneten Empfänger (18, 118) empfangen werden kann.

4. Sensor zur Detektion von Schmutz und/oder Regen mit wenigstens einer Sendeeinheit (12, 112) und wenigstens einer Empfängereinheit (16, 116) sowie einer Prüffläche (22, 122), wobei eine Anlagerung (30, 32) auf der Prüffläche (22, 122) durch einen von der Sendeeinheit (12, 112) ausgesandten und von der Empfängereinheit (16, 116) aufgefangenen Lichtstrahl (24, 26; 124, 126) detektierbar ist, **dadurch gekennzeichnet, dass**
- die Sendeeinheit (12, 112) wenigstens zwei Sender (14, 114) aufweist, wobei wenigstens einer aus wenigstens zwei lokal eng benachbarten Sendequellen (114a, 114b, 114c, 114d) besteht,
- jedem Sender (14, 114) ein Empfänger (18, 118) der Empfängereinheit (16, 116) zugeordnet ist, und
- dass der Empfänger (18, 118) einen oder mehrere Einzelempfänger aufweist.

5. Sensor nach Anspruch 4, **dadurch gekennzeichnet, dass** die von den Sendern (14, 114) ausgesandten Lichtstrahlen (24, 124) unterschiedliche Wellenlängen aufweisen.

6. Sensor nach einem der vorhergehenden Ansprüche, **gekennzeichnet durch** eine Ausgestaltung als Durchlichtsensor mit einer gewölbten Prüffläche (122).

7. Sensor nach einem der vorhergehenden Ansprüche, **gekennzeichnet durch** eine Ausgestaltung als Reflexionssensor mit einer planen Prüffläche (22).

8. Sensor nach einem der vorhergehenden Ansprüche, **dadurch gekennzeichnet, dass** eine Auswerteeinheit (150) vorgesehen ist, um eine wellenlängenabhängige Intensitätsvariation und/oder eine ortsabhängige Intensitätsvariation der empfangenen Lichtstrahlen (26, 126) zu analysieren.

9. Sensor nach einem der vorhergehenden Ansprüche, **dadurch gekennzeichnet, dass** die Sendeeinheit (12, 112) als Sender (14, 114) und Sendequellen (114a, 114b, 114c, 114d) lichtemittierende Dioden umfasst.

10. Sensor nach einem der vorhergehenden Ansprüche, **dadurch gekennzeichnet, dass** der eine oder die mehreren Einzelempfänger eines Empfängers (18, 118) der Empfängereinheit (16, 116) mit dem zugehörigen Sender (14, 114) der Sendeeinheit (12, 112) zeitlich synchronisierbar ist/sind.

11. Sensor nach einem der vorhergehenden Ansprüche, **dadurch gekennzeichnet, dass** die Sendeeinheit (12, 112) wenigstens einen breitbandigen Sender (14, 114) umfasst.

12. Sensor nach Anspruch 11, **dadurch gekennzeichnet, dass** Mittel dem einen oder den mehreren Einzelempfänger zugeordnet sind, mit denen das Licht wellenlängenunabhängig erfassbar ist.

13. Sensor nach einem der Ansprüche 11 oder 12, **dadurch gekennzeichnet, dass** das Licht durch den einen oder die mehreren Einzelempfänger spektral auswertbar ist.

14. Verfahren zum Betreiben eines Sensors (10, 100) zur Detektion von Schmutz und/oder Regen mit wenigstens einer Sendeeinheit (12, 112) und wenigstens einer Empfängereinheit (16, 116) sowie einer Prüffläche (22, 122), wobei eine Anlagerung (30, 32) auf der Prüffläche (22, 122) durch einen von der Sendeeinheit (12, 112) ausgesandten und dem Empfängereinheit (16, 116) aufgefangenen Lichtstrahl (24, 26; 124, 126) detektiert wird, insbesondere nach einem der vorhergehenden Ansprüche, **dadurch gekennzeichnet, dass** ein von einem Empfänger (18, 118) der Empfängereinheit (16, 116) empfangenes Signal abhängig von seiner Wellenlänge von einem oder mehreren Sendern (14, 114) und/oder seinem geometrischen Herkunftsort von mehreren zugeordneten Sendequellen (114a, 114b, 114c, 114d) eines Senders (14, 114) der Sendeeinheit (12, 112) analysiert wird und wenigstens zwei Sendequellen (114a, 114b, 114c, 114d) eines Senders (14, 114) der Sendeeinheit (12, 122), denen der Empfänger (18, 118) der Empfängereinheit (16, 116) gemeinsam zugeordnet ist, angesteuert werden.

15. Verfahren nach Anspruch 14, **dadurch gekennzeichnet, dass** ein Sender (14, 114) der Sendeeinheit (12, 112) ein polychromatisches Signal abgibt.

16. Verfahren nach einem der Ansprüche 14 bis 15, **dadurch gekennzeichnet, dass** eine Variation des empfangenen Signals als Funktion der Wellenlänge und/oder des geometrischen Orts des Senders (114) und/oder der Sendequellen (114a, 114b, 114c, 114d) untersucht wird.

17. Verfahren nach einem der Ansprüche 14 bis 16, **dadurch gekennzeichnet, dass** im Regelfall nur eine Sendequelle (114a) pro Sender (14, 114) betrieben wird und die weiteren Sendequellen (114b, 114c, 114d) des Senders (14, 114) nur bedarfsweise zugeschaltet werden, wenn ein irregulärer Messwert erfasst wird

18. Verfahren nach einem der Ansprüche 14 bis 17, **dadurch gekennzeichnet, dass** im Regelfall nur ein Einzelempfänger pro Empfänger (18, 118) betrieben wird und die weiteren Einzelempfänger des Empfängers (18, 118) nur bedarfsweise zugeschaltet werden, wenn ein irregulärer Messwert erfasst wird.

19. Verfahren nach einem der Ansprüche 14 bis 18, **dadurch gekennzeichnet, dass** bei Überschreiten eines kritischen Werts der Variation des empfangenen Signals auf das Vorhandensein von Wasser als Anlagerung (32) erkannt wird.

20. Verfahren nach einem der Ansprüche 14 bis 19, **dadurch gekennzeichnet, dass** bei Unterschreiten eines kritischen Werts der Variation des empfangenen Signals auf das Vorhandensein von Schmutz als Anlagerung (30) erkannt wird.

21. Verwendung eines Sensors (10, 100) nach einem der Ansprüche 1 bis 13 in einem System zur Leuchtstärkenregelung von Fahrzeugleuchten.
